(19) Europäisches Patentamt
European Patent Office
Office européen des brevets

(11) **EP 0 833 736 B1**

(12) **EUROPÄISCHE PATENTSCHRIFT**

(45) Veröffentlichungstag und Bekanntmachung des Hinweises auf die Patenterteilung:
**29.08.2001 Patentblatt 2001/35**

(51) Int Cl.$^7$: **B29C 45/67**

(21) Anmeldenummer: **96920812.3**

(22) Anmeldetag: **10.06.1996**

(86) Internationale Anmeldenummer:
**PCT/EP96/02508**

(87) Internationale Veröffentlichungsnummer:
**WO 96/41712 (27.12.1996 Gazette 1996/56)**

(54) **HYDRAULISCHE SCHLIESSEINHEIT**

HYDRAULIC CLOSING UNIT

UNITE HYDRAULIQUE DE FERMETURE

(84) Benannte Vertragsstaaten:
**AT BE CH DE DK ES FI FR GB GR IE IT LI LU MC NL PT SE**

(30) Priorität: **12.06.1995 LU 88624**

(43) Veröffentlichungstag der Anmeldung:
**08.04.1998 Patentblatt 1998/15**

(73) Patentinhaber: **HUSKY INJECTION MOLDING SYSTEMS LTD.**
**Bolton Ontario L7E 5S5 (CA)**

(72) Erfinder: **MAILLIET, Pierre**
**L-8508 Redange (LU)**

(74) Vertreter: **Beissel, Jean et al**
**Office Ernest T. Freylinger S.A.**
**234, route d'Arlon**
**B.P. 48**
**8001 Strassen (LU)**

(56) Entgegenhaltungen:
**EP-A- 0 513 572**      **WO-A-93/16828**
**GB-A- 1 299 781**

- **PATENT ABSTRACTS OF JAPAN vol. 11, no. 28 (M-557) [2475] , 27.Januar 1987 & JP,A,61 199920 (NISSEI PLASTICS IND CO), 4.September 1986,**
- **PATENT ABSTRACTS OF JAPAN vol. 17, no. 300 (M-1426), 8.Juni 1993 & JP,A,05 024086 (NISSEI PLASTICS IND CO), 2.Februar 1993,**

**Beschreibung**

Die Erfindung betrifft eine hydraulische Schließeinheit, wie sie zum Beispiel in Spritzgießmaschinen eingesetzt werden.

Die Schließeinheit einer Spritzgießmaschine nimmt die Spritzgießform auf. Sie führt die zum Schließen und Öffnen der Spritzgießform notwendigen Bewegungen durch und erzeugt die zum Zuhalten, beziehungsweise Aufreißen der Spritzgießform notwendigen Kräfte. Die Hauptbestandteile jeder Schließeinheit sind eine feststehende Platte einspritzseitig (nachfolgend Einspritzplatte genannt), eine bewegliche Schließplatte, sowie eine Zuhaltevorrichtung. Ein Teil der Spritzgießform wird auf der feststehenden Einspritzplatte, der komplementäre Teil der Spritzgießform auf der beweglichen Schließplatte aufgespannt. Unter Zuhaltevorrichtung ist die Vorrichtung zu verstehen die beim Einspritzen die erforderliche Schließkraft zum Zuhalten der Spritzgießform erzeugt. Es sind sowohl mechanische Zuhaltevorrichtungen mit Hebelmechanismen, als auch hydraulische Zuhaltevorrichtungen mit Hydrozylinder bekannt: Die vorliegende Erfindung betrifft eine Schließeinheit mit hydraulischer Zuhaltung.

GB-A-1 299 781 beschreibt eine hydraulische Schließeinheit gemäß dem Oberbegriff von Anspruch 1. Dabei ist ein Verdrehen des Kolbens des hydraulischen Kraftzylinders relativ zur Verriegelungsbüchse möglich.

WO-A-93/16828 beschreibt eine Schließeinheit für eine Spritzgießmaschine. Hierbei ist eine bewegliche Schließplatte zwischen einer fest stehenden Einspritzpiatte und einer feststehenden Endplatte mittels zweier Verschiebezylinder verschiebbar.

Die Erfindung geht aus von GB-A-1 299 781. Der Erfindung liegt die Aufgabe zugrunde, eine solche Schließeinheit derart zu gestalten, daß eine einfache Verbindung zwischen Kraftzylinder und Verriegelungsbüchse hergestellt wird, und daß die Innenverzahnung die Verriegelungsbüchse einerseits sowie die Außenverzahnung der Druckstange andererseits vor dem Übertragen der Kraft weitgehend spielfrei aneinanderliegen. werden. Diese Aufgabe wird durch eine Schließeinheit nach Anspruch 1 gelöst.

Die erfindungsgemäße Lösung besteht im wesentlichen darin, daß der Kolben des hydraulischen Kraftzylinders gegen Drehen gesichert und über ein Drehgewinde mit der Verriegelungsbüchse verschraubt ist. Hierdurch kann sowohl eine Druckkraft als auch eine Zugkraft vom drehfesten Kolben über die drehbare Verriegelungsbüchse auf die Druckstange und damit auf die Schließplatte übertragen werden. Das Drehgewinde ist ein einfache, äußerst platzsparende und beanspruchungsgerechte Lösung, den Kolben und die Verriegelungsbüchse drehbar zu verbinden. Durch Drehen der Verriegelungsbüchse von der ersten Winkelstellung in die zweite Winkelstellung erfährt die Verriegelungsbüchse natürlich einen Vorschub X relativ zum Kolben. Dies ist jedoch nicht weiter störend, da dieser Vorschub sogar auf eine äußerst vorteilhafte Art und Weise dazu benutzt werden kann um ein beim Einrenken erforderliches axiales Spiel zwischen der Innenverzahnung und der Außenverzahnung derart zu verteilen, daß vor dem Übertragen der Kraft Innenverzahnung und der Außenverzahnung bereits weitgehend spielfrei aneinander liegen.

Um eine einwandfreies Einrenken der Innenverzahnung in die Außenverzahnung zu gewährleisten, sollte in der Tat beim Einrenken ein relativ großes axiales Flankenspiel vorhanden sein. Ein großes Flankenspiel hat jedoch auch wesentliche Nachteile. So vergrößert sich zum Beispiel der Arbeitshub des Kraftzylinders und damit der Energieverbrauch der Schließeinheit. Die Durchflüsse durch den Kraftzylinder werden erheblich Größer, so daß die Hydraulikanlage der Schließeinheit ebenfalls größer ausgelegt werden muß. Weiterhin wid die Verriegelungsbüchse bei Überwindung eines großen Flankenspiels relativ stark beschleunigt, so daß die Zähne der Innenverzahnung mit großer Wucht auf die Außenverzahnung prallen.

In WO-A-93/16828 wird vorgeschlagen die Außenverzahnung an der Druckstange und die Innenverzahnungen im Verriegelungsring als Gewinde auszuführen, wobei das störende Flankenspiel, entsprechend WO-A-93/16828, durch das Drehen des Verriegelungsrings eliminiert werden soll. Dies bedeutet jedoch, daß die Verzahnung zwangsweise in Drehrichtung des Verriegelungsrings eine negative Steigung in Richtung der zu übertragenden Kraft aufweist, und daß weiterhin die Steigung dieses Gewindes durch das Flankenspiel und den Drehwinkel des Verriegelungsrings zwangsweise festgelegt ist. Hierdurch unterliegt der Konstrukteur jedoch wesentlichen Gestaltungszwängen in Bezug auf die Verzahnungen, die zum Beispiel eine funktions- und beanspruchungsgerechte Optimierung der Verzahnungen in vielen Fällen verhindern.

Entsprechend der vorliegenden Erfindung spielt es keine Rolle ob die Zähne der Innen- und Außenverzahnung ringförmig, schraubenförmig mit positiver Steigung oder schraubenförmig mit negativer Steigung angeordnet sind. Der durch das Drehgewinde beim Drehen der Verriegelungsbüchse erzeugte Vorschub erlaubt jeweils das vorhandene axiale Flankenspiel S zwischen Innenverzahnung und Außenverzahnung derart zu verteilen, daß in Riegelstellung zwischen den Zahnflanken die die Kraft übertragen sollen kein wesentliches axiales Flankenspiel mehr besteht. Ist zudem der Stellantrieb zum Drehen der Verriegelungsbüchse derart ausgelegt, daß er die Verriegelungsbüchse sowohl durch eine Linksdrehung als auch durch eine Rechtsdrehung in eine zweite Winkelstellung stellen kann, wird das Flankenspiel S zwischen Innen- und Außenverzahnung je nach Drehrichtung einmal linksseitig und einmal rechtsseitig verteilt. Die Verzahnungen werden demnach in der ersten Drehrichtung automatisch spielfrei für die Übertragung der Schließkraft und in der zweiten Drehrichtung automatisch spielfrei für die Übertragung der Öffnungskraft auf die Schließplatte.

In der nachfolgenden detaillierten Beschreibung wird unter anderem noch eine äußerst vorteilhafte Ausgestaltung des Stellantriebs vorgestellt.

Ausführungsbeispiele, sowie weitere Merkmale und Vorteile der Erfindung werden anhand der Figuren der beiliegenden Zeichnungen eingehend beschrieben.

Es zeigen:

- Figur 1 eine Ansicht einer erfindungsgemäßen Schließeinheit;
- Figur 2 einen Längsschnitt durch die Schließeinheit der Figur 1;
- Figur 3 und 4 einen Querschnitt durch eine Druckstange und eine Verriegelungsbüchse der Schließeinheit der Figur 1;
- Figur 5 einen Querschnitt durch die Druckstange;
- Figur 6 einen Querschnitt durch die Verriegelungsbüchse;
- Figur 7 einen Schnitt entlang der Schnittlinie A-A der Figur 3;
- Figur 8 einen Schnitt entlang der Schnittlinie B-B der Figur 4;
- Figur 9 eine Vergrößerung aus dem Längsschnitt der Figur 2;
- Figur 10 einen Schnitt durch einen Stellantrieb für die Verriegelungsbüchse;
- Figuren 11-14 Querschnitte durch verschiedene Ausführungen der Druckstange;
- Figuren 15-20 135°-Abwicklungen der Verzahnungen an der Druckstange und der Verriegelungsbüchse;
- Figur 21 einen Längsschnitt durch die Schließeinheit der Figur 1, mit einer schematischen Darstellung einer Vorrichtung zum Positionieren der Schließplatte.

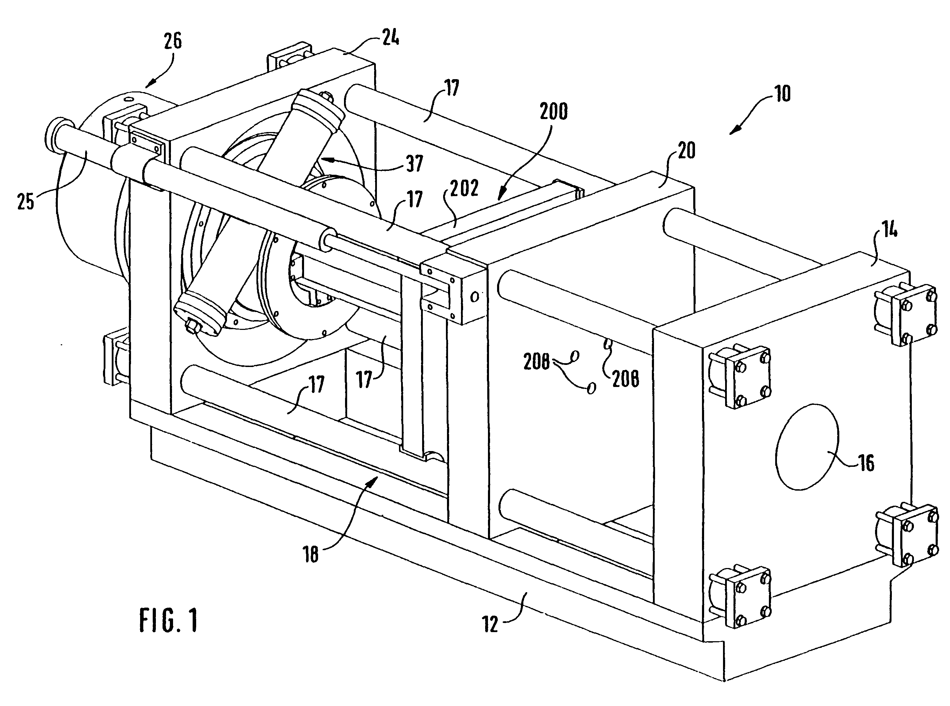

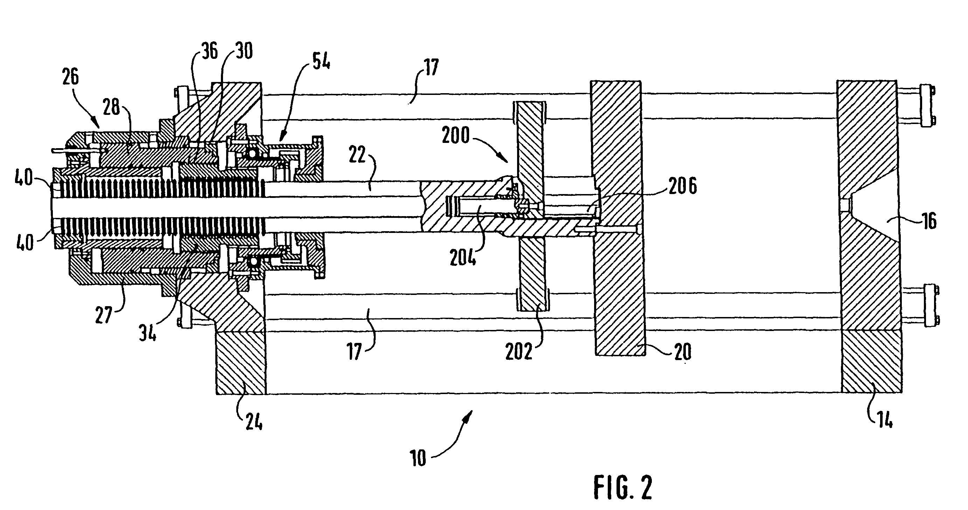

Der allgemeine Aufbau einer erfindungsgemäßen Schließeinheit 10 wird anhand der Figuren 1 und 2 erläutert, welche eine hydraulische Schließeinheit einer Spritzgießmaschine darstellen. Auf einem Untergestell 12 ist eine Einspritzplatte 14, mit einer zentralen Einspritzöffnung 16 für den Einspritzkopf der Spritzgießmaschine, starr montiert. Vier Säulen 17 verbinden die vier Eckpunkte der Einspritzplatte 14 mechanisch mit den vier Eckpunkten einer Endplatte 24, die am anderen Ende des Untergestells 12 ebenfalls starr montiert ist. Das Untergestell 12 bildet ein Führungsbett 18 für eine bewegliche Schließplatte 20 aus. Auf der Einspritzplatte 14 und der Schließplatte 20 werden die komplementären Hälften einer Spritzform (nicht gezeigt) aufgespannt.

Die bewegliche Schließplatte 20 ist über eine Verschiebevorrichtung, welche zum Beispiel seitlich angeordnete Verschiebezylinder 25 umfaßt, auf dem Führungsbett 18 verschiebbar. Diese Verschiebevorrichtung 25 hat die Aufgabe die komplementären Hälften der Spritzform, durch Verschieben der Schließplatte 20 relativ zur Einspritzplatte 14, mit relativ großer Geschwindigkeit zusammen-, beziehungsweise auseinanderzufahren. Man beachte, daß das Gehäuse der Verschiebezylinder 25 an der feststehenden Endplatte 24 befestigt ist, so daß die Verschiebezylinder 25 einen festen Hydraulikanschluß auf der festen Endplatte 14 haben können.

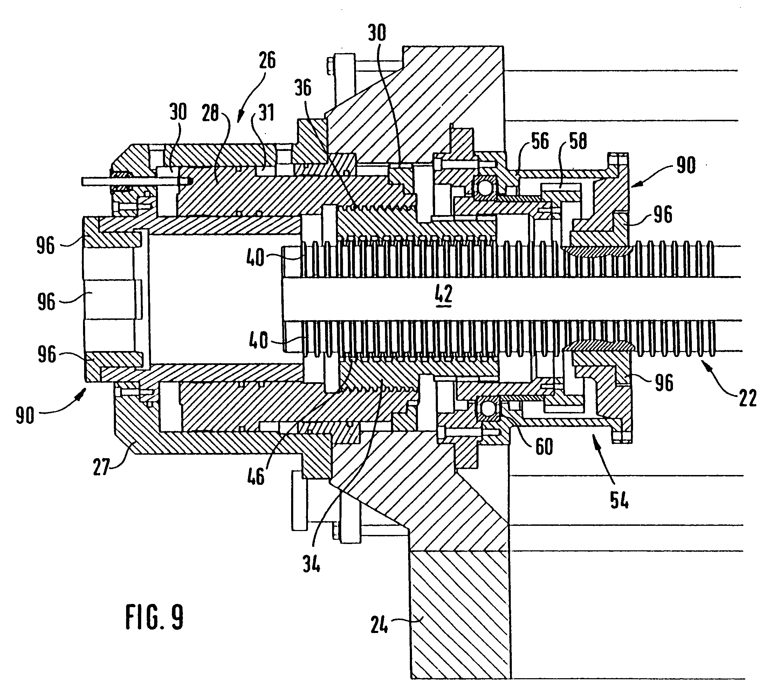

Eine Druckstange 22 erstreckt sich von der beweglichen Schließplatte 20 durch die feststehende Endplatte 24. An der Schließplatte 20 ist die Druckstange 22 starr befestigt. An der feststehenden Endplatte 24 ist der Druckstange 22 ein Kraftzylinder 26 zugeordnet, dessen Gehäuse 27 starr mit der Endplatte 24 verbunden ist. In Figur 2, beziehungsweise in Figur 9, erkennt man, daß dieser Kraftzylinder 26 einen ringförmigen Kolben 28 umfaßt. Dieser Ringkolben 28 ist gegen Drehen, zum Beispiel durch eine Längsfeder 30 in einer Längsnut, gesichert. Mit dem drehfesten Ringkolben ist eine Verriegelungsbüchse 34 drehbar mechanisch verbunden. Insbesondere ist die Verriegelungsbüchse 34 über ein Gewinde 36 (nachfolgend Drehgewinde 36 genannt) drehbar mit dem Ringkolben 28 verschraubt; sie kann zum Beispiel mittels des Drehgewindes 36 in das freie Ende des Ringkolbens 28 eingeschraubt sein. Ein Stellantrieb 37 erlaubt die Verriegelungsbüchse 34 in zwei Richtungen zu drehen und somit ihre Winkelstellung relativ zur Druckstange 22 einzustellen.

An der Druckstange 22 ist längs dem hinteren Stangenabschnitt eine Außenverzahnung 40 vorgesehen. Die Verriegelungsbüchse 34 weist in ihrem Innern eine Innenverzahnung 46 auf. Diese Außen- und Innenverzahnung sind derart komplementär zueinander ausgebildet, daß in einer ersten Winkelstellung der drehbaren Verriegelungsbüchse 34, die Druckstange 22 axial durch die Verriegelungsbüchse 34 durchführbar ist, und daß in mindestens einer zweiten Winkelstellung die Innenverzahnung 46 der Verriegelungsbüchse 34 in die Außenverzahnung 40 der Druckstange zum übertragen einer axialen Kraft eingreift. In der ersten Winkelstellung der Verriegelungsbüchse 34 kann die Druckstange 22 demnach ohne wesentlichen Widerstand axial durch den Ringkolben 28 des hydraulischen Kraftzylinders 26 gleiten. In ihrer zweiten Winkelstellung kann dagegen die auf den Ringkolben 28 geschraubte Verriegelungsbüchse 34 eine bedeutende Kraft auf die Druckstange 22 übertragen.

Der Kraftzylinder 26 weist in seinem Gehäuse 27 eine erste Druckkammer 30 auf, worin der Ringkolben 28 eine stirnseitige Druckfläche ausbildet. Wird, nach Verriegelung der Verriegelungsbüchse 34 an der Druckstange 22, die erste Druckkammer 30 unter Druck gesetzt, übt der Ringkolben 28 über die auf der Druckstange 22 verriegelte Verriegelungsbüchse 34 eine Schließkraft auf die Schließplatte 20 aus.

In einer zweiten Druckkammer 31 des Gehäuses 27 bildet der Ringkolben 28 eine wesentlich geringere Druckfläche als Schulterfläche aus. Wird diese zweite Druckkammer 31 unter Druck gesetzt und die erste Druckkammer entlastet, übt der Ringkolben 28, über die auf der Druckstange 22 verriegelte Verriegelungsbüchse 34, auf die Schließplatte 20 eine Öffnungskraft in entgegengesetzte Richtung der vorbeschriebenen Schließkraft aus. Diese Öffnungskraft dient zum Aufreißen der Spritzform nach dem Guß.

Zum Zusammenfahren der Spritzformhälften durch Verschieben der Schließplatte 20 mittels der Verschiebezylinder 25, steht die Verriegelungsbüchse 34 in der ersten Winkelstellung. In dieser ersten Winkelstellung gleitet die Druckstange 22 beim Verschieben der Schließplatte 20 axial durch die Verriegelungsbüchse 34. Hat die Schließplatte ihre Endstellung erreicht wird die Verriegelungsbüchse 34 an der Druckstange 22 durch Drehen in die zweite Winkelstellung verriegelt. Der Kraftzylinder 26 kann jetzt die benötigte Schließkraft über die Druckstange 22 auf die Schließplatte 20 übertragen.

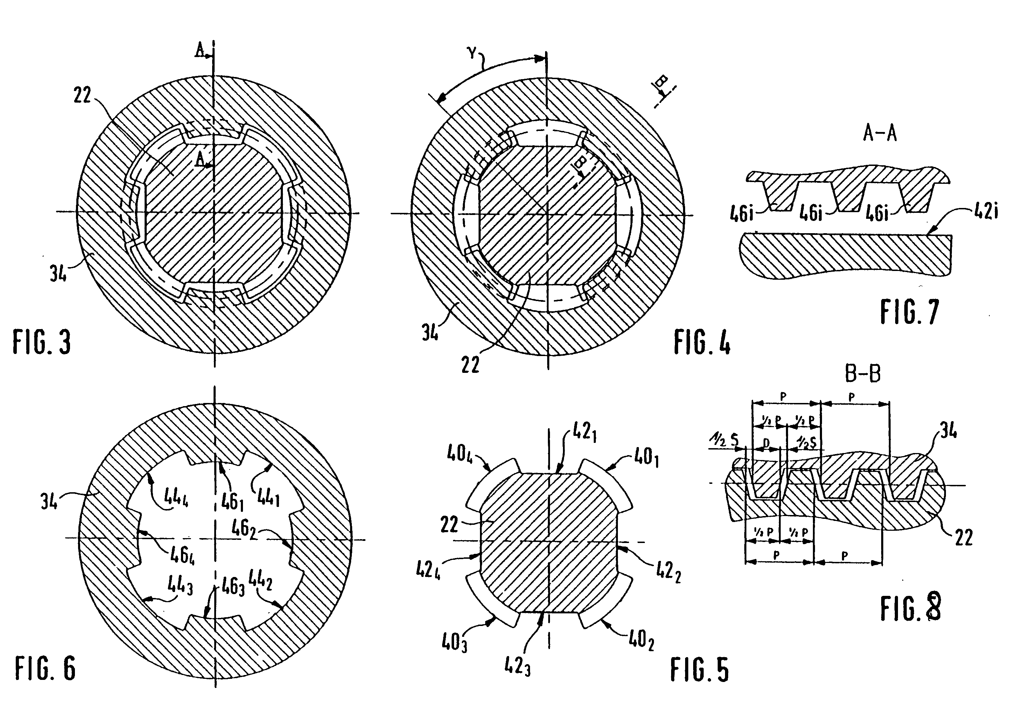

Eine vorteilhafte Ausgestaltung der Verriegelungsmittel wird anhand der Figuren 2 bis 8 näher beschrieben. Die Verriegelungsmittel an der Druckstange 22 umfassen (siehe Figur 2 und 5) vorteilhaft eine Außenverzahnung 40, welche durch Längsnuten 42 in zum Beispiel vier axiale Zahnreihen $40_1$, $40_2$, $40_3$, $40_4$ unterteilt ist. In diesen Zahnreihen $40_1$, $40_2$, $40_3$, $40_4$ sind die Zähne der Außenverzahnung jeweils parallel, in gleichem Abstand zueinander angeordnet. Die Verriegelungsbüchse 34 (siehe Figur 9 und 6) umfaßt eine komplementäre Innenverzahnung, welche ebenfalls durch Längsnuten $44_1$, $44_2$, $44_3$, $44_4$ in drei axiale Zahnreihen $46_1$, $46_2$, $46_3$, $46_4$ unterteilt ist. Die Längsnuten $42_i$ in der Außenverzahnung der Druckstange 22 sind etwas breiter als die Zähne $46_i$ der Verriegelungsbüchse 34, und die Längsnuten $44_i$ in der Innenverzahnung der Verriegelungsbüchse 34 sind etwas breiter als die Zähne $40_i$ der Druckstange 22.

In einer ersten Winkelstellung der Druckstange, die in Figur 3 gezeigt ist, liegen die Zähne 46i der Außenverzahnung der Zahnstange 22 in den Längsnuten $44_i$ der Verriegelungsbüchse 34. Die Druckstange 22 ist in dieser Winkelstellung durch die Verriegelungsbüchse 34 hindurchschiebbar, wobei die Zähne $40_i$ der Außenverzahnung durch die Längsnuten $44_i$ der Innenverzahnung, und die Zähne $46_i$ der Innenverzahnung durch die Längsnuten $42_i$ der Außenverzahnung geführt werden. Figur 7 zeigt in einem Schnitt entlang der Schnittlinie A-A der Figur 3, die Zähne der Innenverzahnung in den Längsnuten der Außenverzahnung.

In einer zweiten Winkelstellung, siehe Figur 4, nach Drehen der Verriegelungsbüchse 34 um einen Winkel $\gamma = 180°/n$ (n = Anzahl der Längsnuten, respektive der Zahnreihen), befinden sich die Zähne $46_i$ der Verriegelungsbüchse 34 axial zwischen den Zähnen $40_i$ der Druckstange 22. In dieser zweiten Winkelstellung greifen also die Zahnreihen der Innenverzahnung in die Zahnreihen der Außenverzahnung zum Übertragen der erforderlichen Schließkraft ein.

Figur 8 zeigt einen Schnitt entlang der Schnittlinie B-B der Figur 4. Man erkennt daß die Zähne der Außen- und Innenverzahnung einen trapezförmigen Querschnitt aufweisen. Die Verzahnungen können schraubenförmig ausgeführt sein, das heißt daß die Zähne entlang einer Schraubenlinie angeordnet sind, und die Verzahnungen demnach ein Gewinde mit einer Steigung P ausbilden. Die Verzahnungen können jedoch auch ringförmig ausgebildet sein, das heißt daß die Zähne parallele Ringe ausbilden, die jeweils in einem Abstand P (auch Teilung P genannt) zueinander angeordnet sind.

Damit die Innenverzahnung beim Drehen der Verriegelungsbüchse 34 in die Außenverzahnung eingreifen kann, müssen natürlich in der ersten Winkelstellung der Verriegelungsbüchse 34 die Zähne $46_i$ der Innenverzahnung axial zwischen den Zähnen $40_i$ der Außenverzahnung stehen. Damit kleinere Positionierungsfehler der beweglichen Schließplatte 20 ein Eingreifen der Innenverzahnung in die Außenverzahnung nicht behindern, ist ein relativ großes axiales Flankenspiel zwischen der Innenverzahnung und der Außenverzahnung erwünscht.

Aus Figur 8 erkennt man, daß : P = 2D+S wobei:

  P = Teilung oder Steigung;
  D = mittlere Zahnbreite;
  S = axiales Flankenspiel.

In der Praxis hat es sich als vorteilhaft erwiesen wenn S = 0,5D, also P = 2,5D ist.

Die Verriegelungsbüchse 34 überträgt extrem hohe Schließkräfte über die Druckstange 22 auf die bewegliche Schließplatte 20. Hinzu kommt, daß die Frequenz der Schließ- und Öffnungsvorgänge in der Praxis sehr hoch ist. Das Material der Verriegelungsbüchse und der Druckstange ist demnach wesentlichen statischen und dynamischen Belastungen ausgesetzt. Hierdurch kann es zu bleibenden Verformungen der Verzahnungen kommen, die Funktion der Verriegelungsvorrichtung beeinträchtigen. Um die negativen Auswirkungen solcher bleibenden Verformungen auf die Verriegelungsfunktion zu reduzieren, können vorteilhaft folgende Vorkehrungen getroffen werden:

  a) Die Verriegelungsbüchse 34 ist derart an den Kolben 28 zu befestigten, daß sie bei Übertragung der sehr hohen Schließkraft auf die Druckstange 22 unter Druckspannungen steht. Hierdurch wird erreicht, daß die Druckstange 22 und die Verriegelungsbüchse 34 gleichartig verformt werden.

  b) Die Querschnitte der Verriegelungsbüchse 34 und der Druckstange 22 sollen derart gestaltet sein, daß sie beim Übertragen der Schließkraft ungefähr gleich großen maximalen Spannungen ausgesetzt sind, das heißt ihr minimaler Querschnitt sollte wenn möglich gleich groß sein.

c) Bei gleicher Zahngeometrie soll die Basis der Zähne der Außenverzahnung ungefähr gleich der Basis der Zähne der Innenverzahnung sein, damit die Spannungsmaxima an diesen kritischen Stellen ungefähr gleich groß sind. Dies bedeutet z.B., daß die Bogenlänge (in Grad) der Zähne der Außenverzahnung größer als die Bogenlänge der Zähne der Innenverzahnung ist.

d) Die Zähne der Außenverzahnung sollten eine höhere Härte als die Zähne der Innenverzahnung aufweisen. Zusätzlich sollte die Flankenfläche der Zähne der Außenverzahnung größer als die Flankenfläche der Zähne der Innenverzahnung sein, damit ein Zahnabdruck der Zähne der Außenverzahnung auf den weicheren Zähnen der Innenverzahnung vermieden wird.

e) Die Streckgrenze der Druckstange 22 soll ungefähr 20% höher als die Streckgrenze der Verriegelungsbüchse 34 sein. Hierdurch wird in Kombination mit den Maßnahmen b) und c) erreicht, daß plastische Verformungen bei Überbelastung vor allem an den Verriegelungsbüchse 34 auftreten und weniger an den Druckstange 22. Plastische Verformungen an den Druckstange 22 sind weitaus störender, da sie nämlich die axiale Homogenität der Außenverzahnung zerstören, was zu Ungenauigkeiten bei der Positionierung der Schließplatte 20 führen kann wenn verschiedene Formgrößen benutzt werden. Weiterhin ist das Ersetzen der Druckstange 22 weitaus teurer als das Ersetzen der Verriegelungsbüchse 34.

Es ist anzumerken, daß die Vorkehrungen a), b) und c) der obigen Aufzählung ebenfalls im Normalfall der elastischen Verformung vorteilhafte Auswirkungen auf die Kraftverteilung haben. Die elastische Verformung der Verriegelungsbüchse und die elastische Verformung der Druckstange sind durch diese Maßnahmen gleichgerichtet und von der gleichen Größenordnung, so daß die zu übertragende Kraft sich gleichmäßig auf sämtliche ineinander eingreifende Zähne der Außen- und der Innenverzahnung verteilt.

Bei der Beschreibung der Figur 8 wurde darauf hingewiesen, daß ein bedeutendes Flankenspiel den Vorteil hat, daß kleine Ungenauigkeiten bei der Positionierung der Schließplatte 20 ein Einrenken der Innenverzahnung der Verriegelungsbüchse 34 in die Außenverzahnung der Druckstange 22 nicht behindern. Jedoch hat ein bedeutendes axiales Flankenspiel auch wesentliche Nachteile. Erstens nimmt der relativ kleine Krafthub des Kolben 28 bei großem Flankenspiel S prozentual stark zu, wodurch der Öl- und der Energieverbrauch des Kraftzylinders größer wird. Zweitens erhält bei großem Flankenspiel S die Verriegelungsbüchse 34 eine hohe Beschleunigung bei Druckbeaufschlagung des Kraftzylinders 28, so daß die Zähne der Innenverzahnung wuchtig gegen die Zähne der Außenverzahnung stoßen. Aus diesem Grund ist es vorteilhaft, das Flankenspiel in Richtung der Kraftübertragung zu reduzieren, beziehungsweise zu beseitigen.

Bei der vorliegenden Erfindung erfolgt die Spielreduzierung oder Spielbeseitigung in Richtung der Kraftübertragung automatisch. Da die Verriegelungsbüchse 34 über das Drehgewinde 36 mit dem Ringkolben 28 verbunden ist, und letzterer gegen Drehen gesichert ist, wird erfährt die Verriegelungsbüchse 34 relativ zum Ringkolben 28 einen Vorschub X = (γ/345°)P', wenn sie um einen Winkel γ gedreht wird, wobei P' die Steigung des Drehgewindes 36 ist.

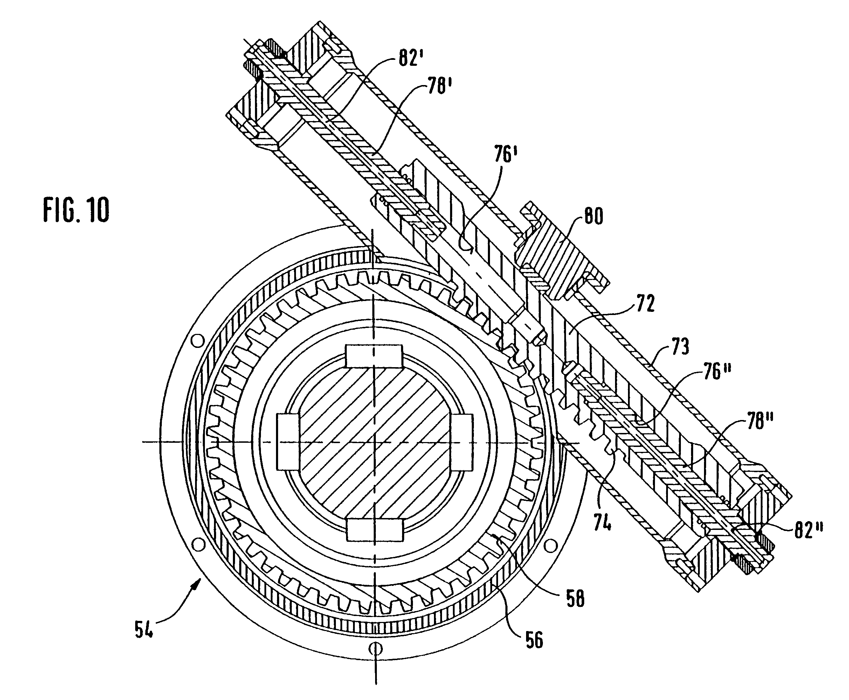

Das Drehen der Verriegelungsbüchse 34 erfolgt über eine Drehvorrichtung 54 welche durch den Stellantrieb 37 angetrieben wird. Dieser Drehvorrichtung 54 umfaßt ein Gehäuse 56 das beispielsweise an der Endplatte 24 angeflanscht ist. Im Gehäuse 56 ist eine Zahnbüchse 58 in einem Kugellager 60 drehbar gelagert. Die Zahnbüchse 58 ist auf das freie Ende der Verriegelungsbüchse 34 aufgesteckt und mit diesem Ende über eine Zahn- oder Keilwellenverbindung derart verbunden, daß ein Drehmoment formschlüssig übertragen wird, daß gleichzeitig jedoch ein axiales Verschieben der Verriegelungsbüchse 34 in der Zahnbüchse 58 möglich ist. Die Winkelstellung der Zahnbüchse 58, und damit die Winkelstellung der Verriegelungsbüchse 34, ist über den Stellantrieb 37 (siehe auch Figur 10), der in die Außenverzahnung 64 der Zahnbüchse 58 eingreift, einstellbar. Es bleibt anzumerken, daß auf die Verriegelungsbüchse 34 ein reines Drehmoment übertragen wird. Sämtliche radialen Kräfte die auf die Zahnbüchse 58 wirken, werden von dem Kugellager 60 direkt auf das Gehäuse 56 übertragen. Hierdurch ist gewährleistet, daß das Drehgewinde 36 nicht weiter durch Stellkräfte beansprucht wird.

Figur 10 zeigt eine vorteilhafte Ausgestaltung eines Stellantriebs 37 für die Drehvorrichtung 54. Dieser Stellantrieb 37 umfaßt eine Zahnstange 72 die mit ihrer Verzahnung 74 in die Zahnbüchse 58 der Drehvorrichtung 54 eingreifbar ist. Die Zahnstange 72 ist in einem Gehäuserohr 73 untergebracht. In jedem Ende der Zahnstange 72 ist eine Zylinderbohrung 76', 76" ausgeführt. Ein Kolben 78', 78" ist jeweils abgedichtet in die Zylinderbohrung 76', 76" eingeführt. Diese Kolben 78', 78" sind vorteilhaft als Tauchkolben ausgebildet und sind axial auf die beiden Enden des Gehäuserohrs 73 aufgeflanscht. Die Zahnstange 72 ist zwischen den beiden Kolben 78', 78" axial im Gehäuserohr 73 hin und herschiebbar. Ein Führungsschuh 80 nimmt die radialen Reaktionskräfte auf die von der Zahnbüchse 58 auf die Zahnstange 72 übertragen werden. In Figur 10 ist die Zahnstange in Anschlag gegen den rechten Kolben 78' gezeigt.

Beide Kolben 78', 78" weisen einen axialen Anschlußkanal 82', 82" für ein Druckmedium auf. Über diese Anschlußkanäle 82', 82" sind die Zylinderbohrungen 76', 76" hinter dem Kolben 78', 78" wahlweise mit dem Druckmedium beaufschlagbar, so daß zwei entgegengesetzt wirkende Druckzylinder zum Verschieben der Zahnstange 72 ausgebildet werden. Es ist anzumerken, daß der Stellantrieb derart ausgelegt ist, daß die Druckstange 22 jeweils aus der ersten Winkelstellung nach rechts und nach links drehbar ist.

Aus Figur 9 ist ersichtlich, daß sowohl eintrittseitig am Gehäuse 56 des Drehantriebs 54 als auch am Gehäuse 27 des Kraftzylinders jeweils eine axiale Führungsvorrichtung 90 für die Druckstange 22 vorgesehen ist. Jede dieser Führungsvorrichtungen 90 umfaßt vier Gleitschuhe 96. Die vier Längsnuten 42 an den Druckstange 22 sind als Führungsflächen für diese Gleitschuhe 96 ausgebildet und über den Stangenabschnitt mit der Außenverzahnung hinaus verlängert. Die Druckstange 22 wird durch diese beiden Führungsvorrichtungen 90 in den Verriegelungsbüchse 34 zentriert.

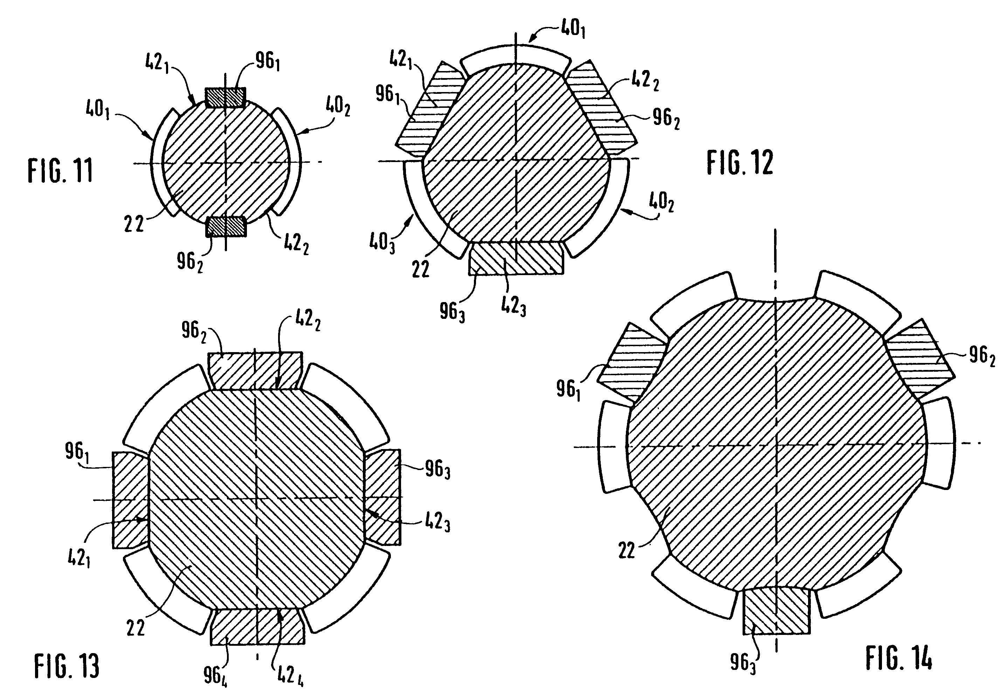

Die Figuren 11 bis 14 zeigen verschiedene Ausführungen einer Druckstange 22, sowie verschiedene Anordnungen der Gleitschuhe 96 und Ausführungen der Führungsflächen für die Gleitschuhe 96. Entsprechend einer Ausführungsart nach Figur 11, welche hauptsächlich für Schließeinheiten mit relativ kleiner Schließkraft geeignet ist, umfaßt die Druckstange 22 zwei Längsnuten $42_1$, $42_2$ welche die Außenverzahnung in zwei Zahnreihen $40_1$, $40_2$ unterteilen. Die Gleitschuhe $96_1$, $96_2$ sind in Führungskanälen in den Längsnuten $42_1$, $42_2$ geführt. Entsprechend der Ausführungsart der Figur 12 umfaßt die Druckstange drei Längsnuten $42_1$, $42_2$, $42_3$, welche die Außenverzahnung in drei Zahnziehen $40_1$, $40_2$, $40_3$ unterteilen. Die Führungsflächen für die Gleitschuhe $96_1$, $96_2$, $96_3$ sind als ebene Flächen ausgebildet, welche in einem Winkel von 120° zueinander stehen. Die Ausführung nach Figur 13 unterscheidet sich von der Ausführung nach Figur 12 dadurch, daß die Druckstange 22 vier Führungsflächen $42_1$, $42_2$, $42_3$, $42_4$ aufweist, welche in einem Winkel von 90° zueinander stehen. Entsprechend Figur 14 ist die Außenverzahnung durch sechs Längsnuten in sechs Zahnreihen unterteilt, jedoch nur jede zweite Längsnut ist als Führungsfläche für einen Gleitschuh $96_1$, $96_2$, $96_3$ ausgebildet. Es ist selbstverständlich, daß größere Schließeinheiten mehr Zahnreihen und Gleitschuhe, als kleinere Schließeinheiten benötigen.

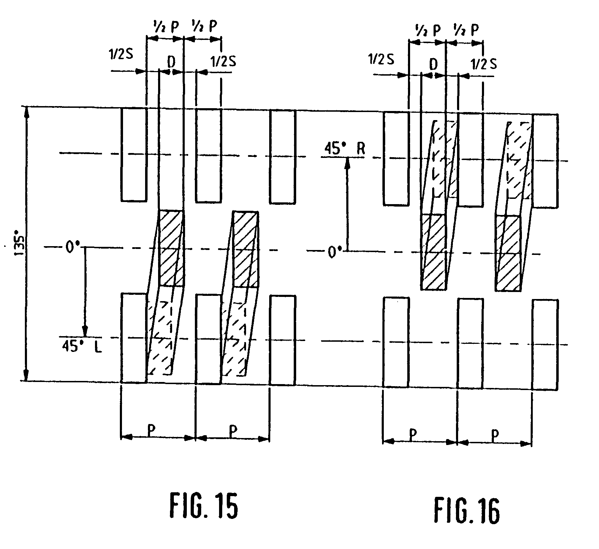

Anhand der Figuren 15 bis 20 wird die Auslegung der Steigung des Gewindes 36 zur Aufnahme des axialen Flankenspiels S näher erläutert. Diese Figuren zeigen jeweils eine 135° Abwicklung der Außen- und Innenverzahnung nach Figur 3 und 4. Man sieht zwei der vier Zahnreihen der Außenverzahnung der Druckstange 22 und eine der vier Zahnreihen der Innenverzahnung der Verriegelungsbüchse 34. Die Zähne der Innenverzahnung sind schraffiert. Folgende Bezeichnungen werden in den Zeichnungen und/oder der nachfolgenden Beschreibung verwendet:

P: Teilung/Steigung der Außenverzahnung an der Druckstange 22, beziehungsweise der Innenverzahnung an der Verriegelungsbüchse 34;

D: Mittlere Zahnbreite;

S: axiales Flankenspiel zwischen Innenverzahnung und Außenverzahnung;

P': Steigung des Drehgewindes 36 zwischen Druckstange 22 und Kolben 28.

Die Figuren 15, 17 und 19 zeigen jeweils die Position der Innenverzahnung vor und nach einer 45°-Drehung der Verriegelungsbüchse 34 nach links. Vor der 45°-Drehung liegen die Zähne der Innenverzahnung in erster Winkelstellung in den Längsnuten zwischen den Zahnreihen der Außenverzahnung. Nach dieser 45°-Drehung nach links liegen die Zähne der Innenverzahnung in zweiter Winkelstellung mit ihrer linken Flanke an den Zähnen der Außenverzahnung an und können spielfrei eine Kraft nach links von der Verriegelungsbüchse auf die Druckstange übertragen. Die Figuren 16, 18 und 20 zeigen jeweils die Position der Innenverzahnung vor und nach einem Drehen der Verriegelungsbüchse um einen Winkel von 45° nach rechts. Vor der 45°-Drehung liegen die Zähne der Innenverzahnung in erster Winkelstellung in den Längsnuten zwischen den Zahnreihen der Außenverzahnung. Nach dieser 45°-Drehung nach rechts liegen die Zähne der Innenverzahnung in zweiter Winkelstellung mit ihrer rechten Flanke an den Zähnen der Außenverzahnung an und können spielfrei eine Kraft nach rechts von der Verriegelungsbüchse auf die Druckstange übertragen. Zwecks Auslegung der Steigung des Gewindes 36 zur Aufnahme des axialen Flankenspiels S wird davon ausgegangen, daß in Ausgangsstellung vor dem Drehen der Verriegelungsbüchse, die Zahnreihen der Innenverzahnung jeweils winkelmäßig genau in der Mitte zwischen den Zahnreihen der Außenverzahnung stehen und daß das axiale Flankenspiel S zwischen Innen- und Außenverzahnung beidseitig gleich verteilt ist.

Im allgemeinen Fall ist die Steigung des Drehgewindes derart auszulegen, daß durch Drehen der Verriegelungsbüchse von der ersten Winkelstellung in die zweite Winkelstellung, das vorhandene Flankenspiel S zwischen Innen- und Außenverzahnung einseitig verteilt wird, derart daß zwischen den Zahnflanken die Kraft übertragen sollen kein wesentliches Flankenspiel mehr besteht.

Figuren 15 und 16 beziehen sich auf den Fall einer ringförmigen Verzahnung. Die Steigung des Drehgewindes 36 ist derart auszulegen, daß durch Drehen der Verriegelungsbüchse von der ersten Winkelstellung in die zweite Winkelstellung, der Vorschub der Verriegelungsbüchse ungefähr der Hälfte des Flankenspiels S zwischen Innen- und Außenverzahnung entspricht, d. h.:

$$P'/8 = 0.5S \text{ oder } P' = 4S;$$

für den Spezialfall S = 0.5D, das heißt S = P/5, ergibt sich demgemäß:

$$P' = 0,8P.$$

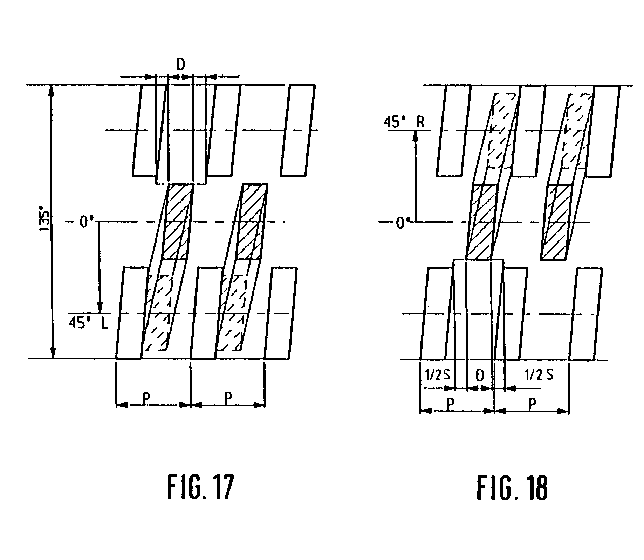

Figuren 17 und 18 beziehen sich auf den Fall einer schraubenförmigen Verzahnung die in Drehrichtung der Verriegelungsbüchse in Richtung der zu übertragenden Kraft ansteigend ist. Geht man davon aus, daß die Steigung P' des Drehgewindes ebenfalls in Drehrichtung der Verriegelungsbüchse in Richtung der zu übertragenden Kraft ansteigend ist, so muß der Vorschub der Verriegelungsbüchse ungefähr der Hälfte des Flankenspiels S zwischen Innenund Außenverzahnung plus einem Achtel der Steigung P der Verzahnung entsprechen, das heißt:

$$P'/8 = 0.5S+P/8 \text{ oder } P' = 4S + P.$$

Für den Spezialfall : S = P/5, das heißt S = 0.5D ,ergibt sich demgemäß:

$$P'= 1,8P.$$

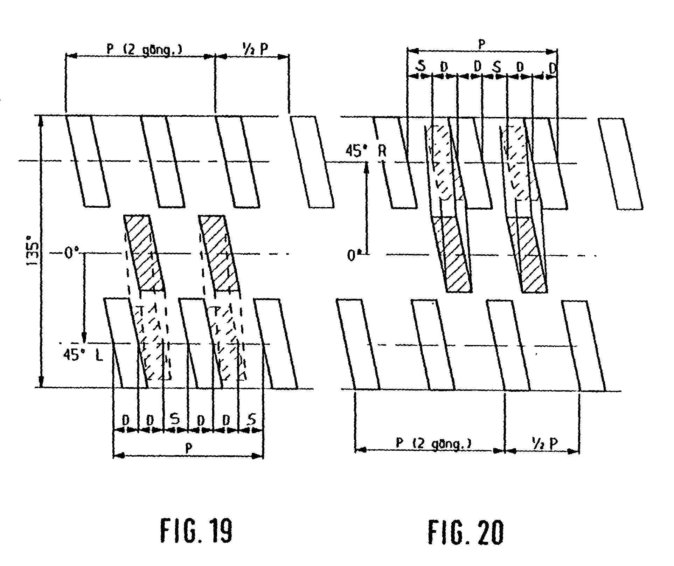

Figuren 19 und 20 beziehen sich auf den Fall einer schraubenförmigen Verzahnung die in Drehrichtung der Verriegelungsbüchse in Richtung der zu übertragenden Kraft eine negative Steigung aufweist. Weiterhin ist in den Figuren 19 und 20 die Verzahnung zweigängig ausgebildet, das heißt, daß S = 0,5P - 2D. Geht man davon aus, daß die Steigung P' des Drehgewindes eine positive Steigung aufweist muß der Vorschub der Verriegelungsbüchse ungefähr der Hälfte des Flankenspiels S zwischen Innenund Außenverzahnung minus einem Achtel der Steigung P der Verzahnung entsprechen, das heißt:

$$P'/8 = 0.5S - P/8 \text{ oder } P'= 4S-P;$$

für den Spezialfall S= P/10, das heißt D= P/5, ergibt sich:

$$P'= -0,6P.$$

Das Minuszeichen bedeutet in diesem Fall, daß das Drehgewinde 36 ebenfalls eine negative Steigung aufweisen muß.

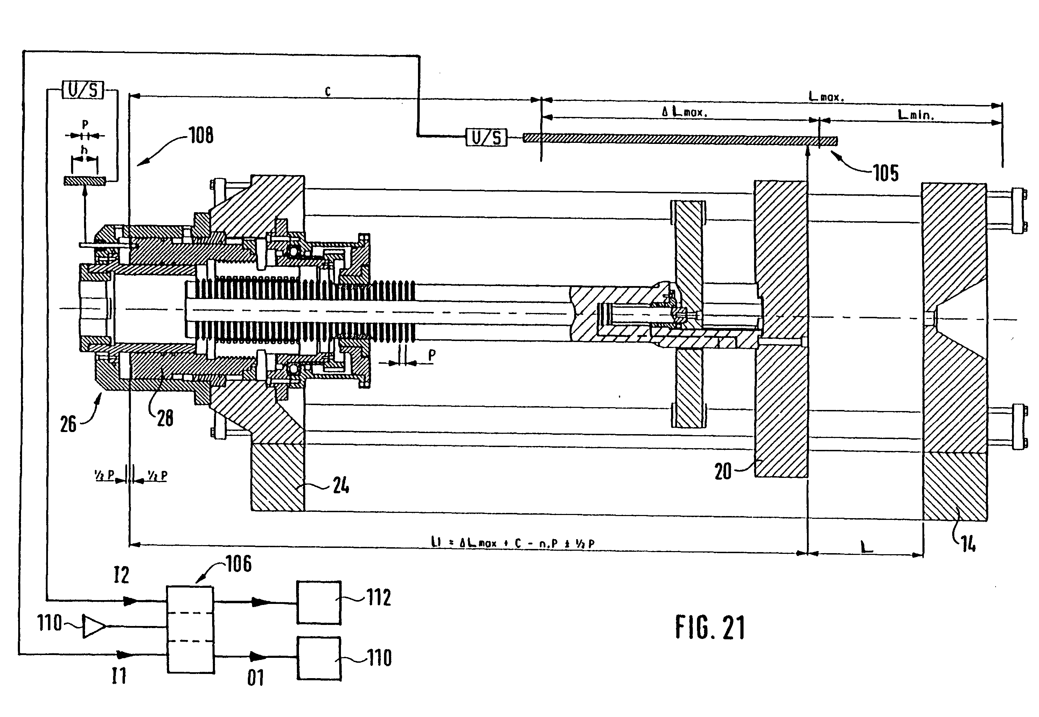

Figur 21 zeigt eine vorteilhafte Vorrichtung zum optimalen Anpassen der Schließeinheit 10 an die Länge der Spritzform. Die Schließplatte 20 ist mit einem Positionsaufnehmer 105 versehen. Dem Kolben 28 des Kraftzylinders 26 ist ebenfalls ein Positionsaufnehmer 108 zugeordnet. Die Positionsaufnehmer 106 und 108 liefern die Eingangssignale 11 und 12 eines digitalen Achsenreglers 106. Die Referenzzahl 110 zeigt eine Eingabeeinheit für die Länge "L" der Spritzform, das heißt den axialen Abstand zwischen Schließplatte 20 und Einspritzplatte 14. Eine erste Steuereinheit im Achsenregler 106, mit I1 als Eingangssignal, liefert mit O1 ein Steuersignal für die Steuerhydraulik 110 der Verschiebezylinder 25 der Schließplatte 20. Diese Steuerhydraulik 110 positioniert die Schließplatte 20 in einem Abstand "L" von der festen Einspritzplatte 14.

Vor dem Drehen der Verriegelungsbüchse 34 von der ersten in die zweite Winkelstellung sollen die Zähne der Innenverzahnung der Verriegelungsbüchse 34 axial genau zwischen den Zähnen der Außenverzahnung der Druckstange positioniert sein, um ein einwandfreies Einrenken der Innenverzahnung in die Außenverzahnung zu ermöglichen. Um diese axiale Positionierung der Verzahnungen unabhängig von der eingestellten Länge "L" zu ermöglichen, wird die Ruhestellung des Ringkolbens 28 in Funktion der eingestellten Länge "L" hydraulisch in einem Intervall [-0.5P; +0.5P] um eine vorgegebene Referenzstellung festgelegt. In anderen Worten, die Verriegelungsbüchse 34 wird axial um einen Betrag y, wobei - 0.5P < y < + 0.5P, relativ zu einem Referenzpunkt verschoben. Hierzu berechnet eine Recheneinheit die Ruhestellung des Kolbens 28 in Funktion der Position der Gegenplatte 20, derart daß vor dem Einrenken der Innenverzahnung der Verriegelungsbüchse in die Außenverzahnung der Druckstange, die Zähne der Innenverzahnung axial zwischen den Zähnen der Außenverzahnung liegen. Eine zweite Steuereinheit im Achsenregler 106, mit I2 als Eingangssignal, liefert mit 02 ein Steuersignal für die Steuerhydraulik 112 des Kraftzylinders 26. Diese Steuerhydraulik 112 positioniert den Kolben 28 in der berechneten Ruhestellung. Die beschriebene Vorrichtung erlaubt mit geringem Aufwand ein Einstellen der Länge "L", unabhängig von der Teilung oder Steigung der Innenund Außenverzahnung.

Mit Bezug auf Figur 1 und Figur 2 wird noch eine vorteilhafte Ausgestaltung einer Auswerfvorrichtung 200 beschrieben. Diese Auswerfvorrichtung 200 umfaßt eine Grundplatte 202 welche verschiebbar auf das vordere Ende der Druckstange 22 montiert ist und an ihren vier Eckpunkten an den vier Säulen 17 geführt ist. Diese Grundplatte 202 ist durch einen Auswerfzylinder 204, der in die Druckstange 22 integriert ist, entlang diesem vorderen Ende der Druckstange 22, aus einer zurückgezogenen Position bis gegen die Schließplatte 20 verschiebbar. Sie weist mehrere Auswerfkolben 206 auf, welche aus entsprechenden Öffnungen 208 (siehe Figur 1) der Schließplatte 20 hervorstoßen, wenn die Platte 202 durch den Auswerfzylinder 204 in Richtung der Schließplatte 20 verschoben wird.

**Patentansprüche**

1. Hydraulische Schließeinheit mit einem ringförmigen Kraftzylinder (26) zum Erzeugen einer Schließkraft, einer Verriegelungsbüchse (34), einem Stellantrieb (37) zum Drehen der Verriegelungsbüchse (34) aus einer ersten Winkelstellung in eine zweite Winkelstellung, einer Druckstange (22) die den hydraulischen Kraftzylinder (26) und die Verriegelungsbüchse (34) axial durchquert, eine Außenverzahnung (40) an der Druckstange (22) und eine Innenverzahnung (46) in der Verriegelungsbüchse (34) , wobei diese Außenverzahnung (40) und Innenverzahnung (46) derart komplementär zueinander ausgebildet sind, daß sie in der ersten Winkelstellung der Verriegelungsbüchse (34) ein axiales Durchschieben der Druckstange (22) durch die Verriegelungsbüchse (34) ermöglichen, und daß in der zweiten Winkelstellung die Innenverzahnung (46) in die Außenverzahnung (40) zum Übertragen einer axialen Kraft eingreift, wobei der Kraftzylinder (26) als doppelt wirkender ringförmiger Druckzylinder, mit jeweils einer ersten Druckkammer (30) zum Erzeugen einer Schließkraft und einer zweiten Druckkammer (31) zum Erzeugen einer Öffnungskraft ausgebildet ist; **dadurch gekennzeichnet** daß der Kolben (28) dieses hydraulischen Kraftzylinders (26) gegen Drehen gesichert ist und über ein Drehgewinde (36) mit der drehbaren Verriegelungsbüchse (34) verschraubt ist.

2. Schließeinheit nach Anspruch 1, **dadurch gekennzeichnet**, daß der Stellantrieb (37) zum Drehen der Verriegelungsbüchse (34) um einen Winkel γ beidseitig zur ersten Winkelstellung ausgelegt ist, wobei die Verriegelungsbüchse (34) einen Vorschub +X, beziehungsweise -X rel. v zum Kolben (28) erfährt.

3. Schließeinheit nach Anspruch 1 oder 2, **dadurch gekennzeichnet**, daß die Steigung des Drehgewindes (36) derart ausgelegt ist, daß durch Drehen der Verriegelungsbüchse (34) aus der ersten Winkelstellung in die zweite Winkelstellung, das vorhandene Flankenspiel S zwischen Innen- und Außenverzahnung (46, 40) einseitig verteilt wird, derart daß zwischen den Zahnflanken die Kraft übertragen sollen kein wesentliches Flankenspiel mehr besteht.

4. Schließeinheit nach einem der Ansprüche 1 bis 3, **dadurch gekennzeichnet**, daß die Zähne der Innen- und Außenverzahnung (46, 40) ringförmig angeordnet sind.

5. Schließeinheit nach Anspruch 4, **dadurch gekennzeichnet**, daß die Steigung des Drehgewindes (36) derart ausgelegt ist, daß durch Drehen der Verriegelungsbüchse (34) von der ersten Winkelstellung in die zweite Winkelstellung, der Vorschub der Verriegelungsbüchse (34) ungefähr der Hälfte des Flankenspiels S zwischen Innen- und Außenverzahnung (46, 40) entspricht.

6. Schließeinheit nach einem der Ansprüche 1 bis 3, **dadurch gekennzeichnet**, daß die Innen- und Außenverzahnung (46, 40) ein Gewinde ausbilden das in Drehrichtung der Verriegelungsbüchse (34) eine positive Steigung P in Richtung der zu übertragenden Kraft aufweist.

7. Schließeinheit nach Anspruch 6, **dadurch gekennzeichnet**, daß die Steigung des Drehgewindes (36) derart ausgelegt ist, daß durch Drehen der Verriegelungsbüchse (34) um einen Winkel γ von der ersten Winkelstellung in die zweite Winkelstellung, der Vorschub der Verriegelungsbüchse (34) ungefähr der Hälfte des Flankenspiels S zwischen Innen- und Außenverzahnung (46, 40) plus (γ/360°) P entspricht.

8. Schließeinheit nach einem der Ansprüche 1 bis 3, **dadurch gekennzeichnet**, daß die Innen- und Außenverzahnung (46, 40) ein Gewinde ausbilden das in Drehrichtung der Verriegelungsbüchse (34) eine negative Steigung P in Richtung der zu übertragenden Kraft aufweist.

9. Schließeinheit nach Anspruch 8, **dadurch gekennzeichnet**, daß die Steigung des Drehgewindes (36) derart ausgelegt ist, daß durch Drehen der Verriegelungsbüchse (34) von der ersten Winkelstellung in die zweite Winkelstellung, der Vorschub X der Verriegelungsbüchse (34) ungefähr der Hälfte des Flankenspiels S zwischen Innen- und Außenverzahnung (46, 40) minus (γ/360°)P entspricht.

10. Schließeinheit nach einem der Ansprüche 6 bis 9, wobei das Gewinde der Innen- und Außenverzahnung (46, 40) doppelgängig ausgebildet ist.

11. Schließeinheit nach einem der Ansprüche 1 bis 10, **dadurch gekennzeichnet**, daß die Verriegelungsbüchse (34) derart an dem Kolben (28) des Kraftzylinders (26) angebracht ist, daß sie bei Übertragung der Schließkraft unter Druckspannung steht.

12. Schließeinheit nach Anspruch 11, **dadurch gekennzeichnet**, daß die Druckstange (22) eine um zirka 20% höhere Streckgrenze als die Verriegelungsbüchse (34) aufweist, wobei Druckstange (22) und Verriegelungsbüchse (34) derart ausgelegt sind, daß sie ungefähr den gleichen Querschnitt aufweisen.

13. Schließeinheit nach Anspruch 11 oder 12, **dadurch gekennzeichnet**, daß die Länge der Basis eines Zahns der Innenverzahnung (46) gleich der Länge der Basis eines Zahns der Außenverzahnung (40) ist.

14. Schließeinheit nach Anspruch 11, 12 oder 13, **dadurch gekennzeichnet**, daß die Zähne der Innenverzahnung (46) eine kleinere Flankenfläche als die Zähne der Außenverzahnung (40) aufweisen, und die Zähne der Außenverzahnung (40) eine größere Härte als die Zähne der Innenverzahnung (46) aufweisen.

15. Schließeinheit nach einem der Ansprüche 1 bis 14, **dadurch gekennzeichnet**, daß die Zähne der Innenverzahnung (46) und die Zähne der Außenverzahnung (40) einen trapezförmigen Querschnitt haben.

16. Schließeinheit nach einem der Ansprüche 1 bis 15, **dadurch gekennzeichnet**, daß Innenverzahnung (46) und Außenverzahnung (40) durch Längsnuten in mindestens zwei Zahnreihen unterteilt sind, derart daß in der ersten Winkelstellung die Zahnreihen der Außenverzahnung (40) durch Längsnuten der Innenverzahnung (46) und die Zahnreihen der Innenverzahnung (46) durch die Längsnuten der Außenverzahnung (40) axial durchführbar sind und somit ein axiales Durchschieben der Druckstange (22) durch den hydraulischen Kraftzylinder (26) und die Verriegelungsbüchse (34) ermöglichen, und daß in der zweiten Winkelstellung die Zähne der Innenverzahnung (46) hinter den Zähnen der Außenverzahnung (40) zum Übertragen einer axialen Kraft eingreifen.

17. Schließeinheit nach Anspruch 16, gekennzeichnet durch Gleitschuhe (96) als radiale Führung für die Druckstange (22), wobei die Längsnuten in der Außenverzahnung (40) der Druckstange (22) als Führungsflächen für diese Gleitschuhe (96) ausgebildet sind.

18. Schließeinheit nach einem der Ansprüche 1 bis 17, **dadurch gekennzeichnet**, daß der Stellantrieb (37) eine Zahnstange (72) zum Verstellen der Winkelstellung der Verriegelungsbüchse (34) aufweist.

19. Schließeinheit nach Anspruch 18, **dadurch gekennzeichnet**,

    daß die Zahnstange (72) in jedem Ende eine Zylinderbohrung (76', 76") aufweist,
    daß in die zwei Zylinderbohrungen (76', 76") jeweils ein feststehender Kolben (78', 78") abgedichtet eingeführt ist, so daß die Zahnstange (72), zwischen den beiden feststehenden Kolben (78', 78") axial hin- und herschiebbar ist, und

daß die beiden Zylinderbohrungen (76', 76") hinter den feststehenden Kolben (78', 78") mit einem Druckmedium beaufschlagbar sind, so daß zwei entgegengesetzt wirkende Druckzylinder zum Verschieben der Zahnstange (72) ausgebildet werden.

20. Schließeinheit nach Anspruch 19, **dadurch gekennzeichnet**, daß jeder Kolben (78', 78") einen axialen Anschlußkanal (82', 82") für eine Druckflüssigkeit aufweist.

21. Schließeinheit nach Anspruch 18, 19 oder 20, gekennzeichnet durch eine Antriebsbüchse (58) mit Außenverzahnung (40) welche in die Zähne der Zahnstange (72) formschlüssig eingreifen, wobei die Antriebsbüchse (58) in einem Gehäuse drehbar gelagert ist, und durch Kupplungsmittel zum formschlüssigen Übertragen eines Drehmoments von der Antriebsbüchse (58) auf die Verriegelungsbüchse (34), wobei diese Kupplungsmittel derart ausgebildet sind, daß sie ein axiales Verschieben der Verriegelungsbüchse (34) relativ zur Antriebsbüchse (58) ermöglichen.

22. Schließeinheit nach Anspruch 21, **dadurch gekennzeichnet**, daß die Kupplungsmittel als Zahn- oder Keilwellenverbindung ausgeführt sind.

23. Schließeinheit nach einem der Ansprüche 1 bis 22, gekennzeichnet durch eine Steuereinheit (106) zum axialen Positionieren des Kolbens (28) des Kraftzylinders (26) in einer Ruhestellung die derart berechnet ist, daß beim Drehen der Verriegelungsbüchse (34) aus der ersten Winkelstellung in die zweite Winkelstellung, die Zähne der Innenverzahnung (46) axial zwischen den Zähnen der Außenverzahnung (40) liegen.

24. Schließeinheit nach einem der Ansprüche 1 bis 23, gekennzeichnet durch

    eine Schließplatte (20) die mechanisch mit der Druckstange (22) verbunden ist,
    eine Verschiebevorrichtung (25) zum Verschieben der Schließplatte (20),
    einen Positionsaufnehmer (105) für die Schließplatte,
    einen Positionsaufnehmer (108) für die Ist-Position des Kolbens (28) des Kraftzylinders (26),
    eine Recheneinheit (106) zum Berechnen einer Ruhestellung des Kolbens (28) in Funktion der gemessenen Position der Schließplatte (20), derart daß vor dem Einrenken der Innenverzahnung (46) der Verriegelungsbüchse (34) in die Außenverzahnung (40) der Druckstange (22), die Zähne der Innenverzahnung (46) axial zwischen den Zähnen der Außenverzahnung (40) liegen, und

eine Steuereinheit (106) mit dem Meßwert des Positionsaufnehmers des Kolbens (28) als Eingangssignal, zum Positionieren des Kolbens (28) in die berechnete Ruhestellung.

25. Schließeinheit nach einem der Ansprüche 1 bis 24, gekennzeichnet durch eine Auswerfvorrichtung (200) mit einer Grundplatte (202) welche verschiebbar auf das vordere Ende der Druckstange (22) montiert ist und an ihren vier Eckpunkten an den vier Säulen (17) geführt ist, mindestens ein Auswerfkolben (206) auf der Grundplatte und einen Auswerfzylinder (204), der in die Druckstange (22) integriert ist.

**Claims**

1. Hydraulic closing unit with an annular power cylinder (26) for producing a closing force, a locking bush (34), an adjusting drive (37) for rotating the locking bush (34) from a first angular position to a second angular position of a pressure rod (22) which passes axially through the hydraulic power cylinder (26) and the locking bush (34), an external gearing (40) on the pressure rod (22) and an internal gearing (46) in the locking bush (34), wherein the external gearing (40) and internal gearing (46) are designed to complement one another in such a manner that, in the first angular position of the locking bush (34), they allow the pressure rod (22) to be displaced axially through the locking bush (34), and that in the second angular position, the internal gearing (46) engages with the external gearing (40) to transmit an axial force, wherein the power cylinder (26) is designed as a double-acting, annular pressure cylinder providing in each case a first pressure chamber (30) for producing a closing force and a second pressure chamber (31) for producing an opening force,
**characterised in that**
the piston (28) of said hydraulic power cylinder (26) is secured against rotating and is screwed via a rotary thread (36) to the rotatable locking bush (34).

2. Closing unit according to claim 1, **characterised in that** the adjusting drive (37) is designed to rotate the locking bush (34) through an angle $\gamma$ on both sides of the first angular position, wherein the locking bush (34) experiences a displacement +X resp. -X relative to the piston (28).

3. Closing unit according to claim 1 or 2, **characterised in that** the lead of the rotary thread (36) is designed in such a manner that by rotating the locking bush (34) from the first angular position into the second angular position, the flank clearance S, present between the internal and external gearing (46, 40) is distributed unilaterally in such a manner that no substantial flank clearance any longer exists between the tooth flanks which are to transmit a force.

4. Closing unit according to any one of claims 1 to 3, **characterised in that** the teeth of the internal and external gearing (46,40) are arranged in an annular manner.

5. Closing unit according to claim 4, **characterised in that** the lead of the rotary thread (36) is designed in such a manner that by rotating the locking bush (34) from the first angular position into the second angular position, the displacement of the locking bush (34) corresponds to approximately half of the flank clearance S between the internal and external gearing (46, 40).

6. Closing unit according to any one of claims 1 to 3, **characterised in that** the internal and external gearing (46, 40) form a thread which, in the direction of rotation of the locking bush (34), comprises a positive lead P in the direction of the force to be transmitted.

7. Closing unit according to claim 6, **characterised in that** the lead of the rotary thread (36) is designed in such a manner that by rotating the locking bush (34) through an angle $\gamma$ from the first angular position into the second angular position, the displacement of the locking bush (34) corresponds to approximately half of the flank clearance S between the internal and external gearing (46, 40) plus $(\gamma/360°)P$.

8. Closing unit according to any one of claims 1 to 3, **characterised in that** the internal and external gearing (46, 40) form a thread which, in the direction of rotation of the locking bush (34), comprises a negative lead P in the direction of the force to be transmitted.

9. Closing unit according to claim 8, **characterised in that** the lead of the rotary thread (36) is designed in such a manner that by rotating the locking bush (34) from the first angular position into the second angular position, the displacement X of the locking bush (34) corresponds to approximately half of the flank clearance S between the internal and external gearing (46, 40) minus $(\gamma/360°)P$.

10. Closing unit according to any one of claims 6 to 9, wherein the thread of the internal and external gearing (46, 40) is designed as a double thread.

11. Closing unit according to any one of claims 1 to 10, **characterised in that** the locking bush (34) is attached to the piston (28) of the power cylinder (26) in such a manner that it is under compressive strain when the closing force is applied.

12. Closing unit according to claim 11, **characterised in that** the pressure rod (22) provides a yield point approximately 20% higher than the locking bush (34), wherein the pressure rod (22) and locking bush (34) are designed in such a manner that they provide approximately the same cross section.

13. Closing unit according to claim 11 or 12, **characterised in that** the length of the base of one tooth of the internal gearing (46) is the same as the length of the base of one tooth of the external gearing (40).

14. Closing unit according to claim 11, 12 or 13, **characterised in that** the teeth of the internal gearing (46) provide a smaller flank area than the teeth of the external gearing (40), and the teeth of the external gearing (40) provide a greater hardness than the teeth of the internal gearing (46).

15. Closing unit according to any one of claims 1 to 14, **characterised in that** the teeth of the internal gearing (46) and the teeth of the external gearing (40) provide a trapezoidal cross section.

16. Closing unit according to any one of claims 1 to 15, **characterised in that** the internal gearing (46) and the external gearing (40) are sub-divided by longitudinal grooves into at least two rows of teeth, in such a manner that in the first angular position, the rows of teeth of the external gearing (40) can be led axially through longitudinal grooves of the internal gearing (46) and the rows of teeth of the internal gearing (46) can be led axially through the longitudinal grooves of the external gearing (40) and thereby allow the pressure rod (22) to be displaced axially through the hydraulic power cylinder (26) and the locking bush (34), and that in the second angular position, the teeth of the internal gearing (46) engage behind the teeth of the external gearing (40) to transmit an axial force.

17. Closing unit according to claim 16, characterised by sliding shoes (96) as a radial guide for the pressure rod (22), wherein the longitudinal grooves in the external gearing (40) of the pressure rod (22) are designed as guide surfaces for these sliding shoes (96).

18. Closing unit according to any one of claims 1 to 17, **characterised in that** the adjusting drive (37) comprises a toothed rack (72) for adjusting the angular position of the locking bush (34).

19. Closing unit according to claim 18, **characterised in that** the toothed rack (72) comprises a cylindrical bore (76', 76") in each end,

that a fixed piston (78', 78") is introduced into each of the two cylindrical bores (76', 76") forming a seal so that the toothed rack (72) can be displaced axially backwards and forwards between the two fixed pistons (78', 78"), and that the two cylindrical bores (76', 76") can be charged with a pressure medium behind the fixed pistons (78', 78") so that two pressure cylinders acting in opposition are formed for the displacement of the toothed rack (72).

20. Closing unit according to claim 19, **characterised in that** each piston (78', 78") comprises an axial connecting channel (82', 82") for a pressure fluid.

21. Closing unit according to claim 18, 19 or 20, characterised by a drive bush (58) with external gearing (40) which engages positively with the teeth of the toothed rack (72), wherein the drive bush (58) is rotatably fitted in a housing, and by coupling means for the positive transmission of a rotary moment from the drive bush (58) to the locking bush (34), wherein these coupling means are designed in such a manner that they allow an axial displacement of the locking bush (34) relative to the drive bush (58).

22. Closing unit according to claim 21, **characterised in that** the coupling means are designed as an involute spline or spline connection.

23. Closing unit according to any one of claims 1 to 22, characterised by a control unit (106) for the axial positioning of the piston (28) of the power cylinder (26) in a resting position, which is calculated in such a manner that when the locking bush (34) is rotated from the first angular position into the second angular position, the teeth of the internal gearing (46) lie axially between the teeth of the external gearing (40).

24. Closing unit according to any one of claims 1 to 23, characterised by a closing plate (20), which is connected mechanically to a pressure rod (22),

a displacement device (25) for displacing the closing plate (20), a position detector (105) for the closing plate, a position detector (108) for the actual position of the piston (28) of the power cylinder (26), a calculation unit (106) for calculating a resting position of the piston (28) as a function of the measured position of the closing plate (20) in such a manner that before the internal gearing (46) of the locking bush (34) engages with the external gearing (40) of the pressure rod (22), the teeth of the internal gearing (46) lie axially between the teeth of the external gearing (40), and

a control unit (106) with the measured value of the position detector of the piston (28) as an input signal, for positioning the piston (28) in the calculated resting position.

25. Closing unit according to any one of claims 1 to 24, characterised by an ejector device (200) with a base plate (202) which is mounted so that it can be displaced onto the front end of the pressure rod (22) and is guided at its four corner points on the four pillars (17), at least one ejector piston (206) on the base plate and one ejector cylinder (204) which is integrated into the pressure rod (22).

**Revendications**

1. Unité hydraulique de fermeture avec un cylindre moteur annulaire (26) pour créer une force de fermeture, une douille de verrouillage (34), un actionneur (37) pour faire tourner la douille de verrouillage (34) depuis une première position angulaire jusque dans une deuxième position angulaire, une tringle de poussée (22) qui traverse axialement le cylindre moteur hydraulique (26) et la douille de verrouillage (34), une denture extérieure (40) sur la tringle de poussée (22) et une denture intérieure (46) dans la douille de verrouillage (34), cette denture extérieure (40) et cette denture intérieure (46) étant configurées de manière à être complémentaires l'une de l'autre, de telle sorte que dans la première position angulaire de la douille de verrouillage (34), elles permettent un coulissement axial de la tringle de poussée (22) dans la douille de verrouillage (34), et que dans la deuxième position angulaire, la denture intérieure (46) s'engage dans la denture extérieure (40) pour transmettre une force axiale, dans laquelle le cylindre moteur (26) est configuré comme cylindre annulaire de poussée à double effet, avec chaque fois une première chambre de poussée (30) pour la création d'une force de fermeture et une deuxième chambre de poussée (31) pour la création d'une force d'ouverture, **caractérisée en ce que** le piston (28) de ce cylindre moteur hydraulique (26) est empêché de tourner et est vissé par un filet rotatif (36) à la douille de verrouillage (34) rotative.

2. Unité de fermeture selon la revendication 1, **caractérisée en ce que** l'actionneur (37) est conçu pour faire tourner la douille de verrouillage (34) sur un angle $\gamma$ des deux côtés de la première position angulaire, la douille de verrouillage (34) exécutant une avance + X, respectivement - X par rapport au piston (28).

3. Unité de fermeture selon la revendication 1 ou 2, **caractérisée en ce que** le pas du filet rotatif (36) est conçu de telle sorte que par rotation de la douille de verrouillage (34) depuis la première position angulaire jusque dans la deuxième position angulaire, le jeu S existant entre les flancs de la denture intérieure et de la denture extérieure (46, 40) est réparti d'un côté de telle sorte qu'il n'existe essentiellement plus de jeu entre les flancs des dents qui transmettent une force.

4. Unité de fermeture selon l'une des revendications 1 à 3, **caractérisée en ce que** les dents de la denture intérieure et de la denture extérieure (46, 40) sont disposées en forme d'anneau.

5. Unité de fermeture selon la revendication 4, **caractérisée en ce que** le pas du filet rotatif (36) est conçu de telle sorte que par rotation de la douille de verrouillage (34) depuis la première position angulaire jusque dans la deuxième position angulaire, l'avance de la douille de verrouillage (34) corresponde sensiblement à la moitié du jeu S entre les flancs de la denture intérieure et de la denture extérieure (46, 40).

6. Unité de fermeture selon l'une des revendications 1 à 3, **caractérisée en ce que** la denture intérieure et la denture extérieure (46, 40) forment un filet qui, dans le sens de rotation de la douille de verrouillage (34), forme un pas positif P dans la direction de la force à transmettre.

7. Unité de fermeture selon la revendication 6, **caractérisée en ce que** le pas du filet rotatif (36) est conçu de telle sorte que par une rotation de la douille de verrouillage (34) d'un angle $\gamma$ depuis la première position angulaire jusque dans la deuxième position angulaire, l'avance de la douille de verrouillage (34) corresponde sensiblement à la moitié du jeu S entre les flancs de la denture intérieure et de la denture extérieure (46, 40) + $(\gamma/360°)P$.

8. Unité de fermeture selon l'une des revendications 1 à 3, **caractérisée en ce que** la denture intérieure et la denture extérieure (46, 40) forment un filet qui, dans le sens de rotation de la douille de verrouillage (34) présente un pas négatif P dans la direction de la force à transmettre.

9. Unité de fermeture selon la revendication 8, **caractérisée en ce que** le pas du filet rotatif (36) est conçu de telle sorte que par une rotation de la douille de verrouillage (34) depuis la première position angulaire jusque dans la deuxième position angulaire, l'avance X de la douille de verrouillage (34) corresponde sensiblement à la moitié du jeu S entre les flancs de la denture intérieure et de la denture ex-

térieure (46, 40) moins $(\gamma/360°)P$.

**10.** Unité de fermeture selon l'une des revendications 6 à 9, dans laquelle le filet de la denture intérieure et de la denture extérieure (46, 40) est un filet double.

**11.** Unité de fermeture selon l'une des revendications 1 à 10, **caractérisée en ce que** la douille de verrouillage (34) est installée sur le piston (28) du cylindre moteur (26) de telle sorte qu'elle soit placée sous une contrainte de compression lors du transfert de la force de fermeture.

**12.** Unité de fermeture selon la revendication 11, **caractérisée en ce que** la tringle de poussée (22) présente une limite d'allongement supérieure d'environ 20 % à celle de la douille de verrouillage (34), la tringle de poussée (22) et la douille de verrouillage (34) étant conçues de manière à présenter sensiblement la même section transversale.

**13.** Unité de fermeture selon la revendication 11 ou 12, **caractérisée en ce que** la longueur de la base d'une dent de la denture intérieure (46) est identique à la longueur de la base d'une dent de la denture extérieure (40).

**14.** Unité de fermeture selon la revendication 11, 12 ou 13, **caractérisée en ce que** les dents de la denture intérieure (46) présentent des flancs dont la surface est plus petite que celle des dents de la denture extérieure (40), et les dents de la denture extérieure (40) présentent une dureté plus élevée que celle des dents de la denture intérieure (46).

**15.** Unité de fermeture selon l'une des revendications 1 à 14, **caractérisée en ce que** les dents de la denture intérieure (46) et les dents de la denture extérieure (40) présentent une section transversale de forme trapézoïdale.

**16.** Unité de fermeture selon l'une des revendications 1 à 15, **caractérisée en ce que** la denture intérieure (46) et la denture extérieure (40) sont divisées par des rainures longitudinales en au moins deux rangées de dents, de telle sorte que dans la première position angulaire, les rangées de dents de la denture extérieure (40) puissent traverser axialement les rainures longitudinales de la denture intérieure (46) et que les rangées de dents de la denture intérieure (46) puissent traverser axialement les rainures longitudinales de la denture extérieure (40) pour permettre ainsi un coulissement axial de la tringle de poussée (22) dans le cylindre moteur hydraulique (26) et dans la douille de verrouillage (34), et en ce que dans la deuxième position angulaire, les dents de la denture intérieure (46) s'engagent derrière les dents de la denture extérieure (40) pour transmettre une force axiale.

**17.** Unité de fermeture selon la revendication 16, caractérisée par des patins coulissants (96) qui servent de guidage radial à la tringle de poussée (22), les rainures longitudinales dans la denture extérieure (40) de la tringle de poussée (22) étant configurées comme surfaces de guidage pour ces patins coulissants (96).

**18.** Unité de fermeture selon l'une des revendications 1 à 17, **caractérisée en ce que** l'actionneur (37) présente une crémaillère (72) pour l'ajustement de la position angulaire de la douille de verrouillage (34).

**19.** Unité de fermeture selon la revendication 18, caractérisée

en ce que la crémaillère (72) présente à chaque extrémité un alésage cylindrique (76', 76"), en ce qu'un piston fixe (78', 78") est chaque fois inséré de manière étanche dans les deux alésages cylindriques (76', 76"), de telle sorte que la crémaillère (72) peut coulisser axialement en va-et-vient entre les deux pistons fixes (78', 78"), et en ce que les deux alésages cylindriques (76', 76") situés derrière le piston fixe (78', 78") peuvent recevoir un fluide sous pression, de telle sorte que deux cylindres de poussée agissant en sens opposés sont formés pour le déplacement de la crémaillère (72).

**20.** Unité de fermeture selon la revendication 19, **caractérisée en ce que** chaque piston (78', 78") présente un canal axial de raccordement (82', 82") pour un liquide sous pression.

**21.** Unité de fermeture selon la revendication 18, 19 ou 20, caractérisée par une douille d'entraînement (58) avec une denture extérieure (40) qui s'engage par conjugaison de forme dans les dents de la crémaillère (72), la douille d'entraînement (58) étant montée à rotation dans un boîtier, et par des moyens d'accouplement en vue de la transmission par conjugaison de forme d'un couple de rotation de la douille d'entraînement (58) à la douille de verrouillage (34), ces moyens d'accouplement étant configurés de telle sorte qu'ils permettent un déplacement axial de la douille de verrouillage (34) par rapport à la douille d'entraînement (58).

**22.** Unité de fermeture selon la revendication 21, **caractérisée en ce que** les moyens d'accouplement sont configurés comme liaison à arbre cannelé ou clavetté.

**23.** Unité de fermeture selon l'une des revendications 1 à 22, caractérisée par une unité de commande (106) pour le positionnement axial du piston (28) du cylindre moteur (26) dans une position de repos qui est calculée de telle sorte que lors d'une rotation de la douille de verrouillage (34) depuis la première position angulaire jusque dans la deuxième position angulaire, les dents de la denture intérieure (46) soient situées axialement entre les dents de la denture extérieure (40).

**24.** Unité de fermeture selon l'une des revendications 1 à 23, caractérisée par

une plaque de fermeture (20) qui est reliée mécaniquement à la tringle de poussée (22),
un dispositif de déplacement (25) pour déplacer la plaque de fermeture (20),
un enregistreur de position (105) pour la plaque de fermeture,
un enregistreur de position (108) pour la position effective du piston (28) du cylindre moteur (26),
une unité de calcul (106) pour calculer une position de repos du piston (28) en fonction de la position mesurée de la plaque de fermeture (20), de telle sorte qu'avant que la denture intérieure (46) de la douille de verrouillage (34) vienne s'engrener dans la denture extérieure (40) de la tringle de poussée (22), les dents de la denture intérieure (46) soient situées axialement entre les dents de la denture extérieure (40), et
une unité de commande (106) qui utilise la valeur de mesure de l'enregistreur de position du piston (28) comme signal d'entrée pour positionner le piston (28) dans la position de repos calculée.

**25.** Unité de fermeture selon l'une des revendications 1 à 24, caractérisée par un dispositif d'expulsion (200) avec une plaque de base (202) qui est montée à coulissement sur l'extrémité avant de la tringle de poussée (22) et qui est guidée sur les quatre colonnes (17) par ses quatre coins, par au moins un piston d'expulsion (206) sur la plaque de base et un cylindre d'expulsion (204) qui est intégré dans la tringle de poussée (22).

FIG. 1

EP 0 833 736 B1

FIG. 2

FIG. 3

FIG. 4

A–A

FIG. 7

FIG. 6

FIG. 5

B–B

FIG. 8

EP 0 833 736 B1

FIG. 9

FIG. 10

FIG. 14

FIG. 12

FIG. 11

FIG. 13

FIG.16

FIG.15

FIG. 18

FIG. 17

FIG. 20

FIG. 19

$$U = \Delta L_{max} + C - n.P \pm \tfrac{1}{2}P$$

FIG. 21

EP 0 833 736 B1